# EUROPÄISCHE PATENTSCHRIFT

(11) **EP 2 385 210 B1**
(45) Veröffentlichungstag und Bekanntmachung des Hinweises auf die Patenterteilung: **18.09.2013**
(21) Anmeldenummer: 11165038.8
(22) Anmeldetag: 06.05.2011
(51) Int. Cl.: E06B 9/72, F16H 1/46, E06B 9/322, E06B 9/70, E04F 10/06

(54) **Planetenradgetriebe für Antriebsmotoren**
Planetary gear transmission for drive motors
Engrenage planétaire pour moteurs d'entraînement

(30) Priorität: 07.05.2010 DE 102010019842
(43) Veröffentlichungstag der Anmeldung: 09.11.2011
(73) Patentinhaber: Gerhard Geiger GmbH & Co., 74321 Bietigheim-Bissingen (DE)
(72) Erfinder: Dangel, Hans-Michael, 74391 Erligheim (DE)
(74) Vertreter: Jeck, Anton

(56) Entgegenhaltungen:
- EP-A1- 0 546 995
- EP-A1- 2 230 415
- DE-A1- 3 903 517
- DE-A1-102008 058 098
- US-A- 2 052 815
- US-A1- 2002 098 938

## Beschreibung

Die vorliegende Erfindung betrifft ein Planetenradgetriebe für eine Antriebsvorrichtung gemäß dem Oberbegriff des Anspruchs 1.

Derartige Antriebsvorrichtungen sind vielfach allgemein bekannt. Sie beinhalten in der Regel ein mehrstufiges Planetengetriebe, das zur Verminderung der Drehzahl des Motors eingesetzt wird. In der Regel werden diese Motoren als Rohr- oder Blockmotor ausgebildet, wie z. B. in der DE 3903517 beschrieben ist.

### Stand der Technik

Die genannten Planetengetriebe haben in der Regel zwei oder mehr Stufen, die immer gleichzeitig zum Einsatz kommen. Dies bedeutet, dass die Ausgangsdrehzahl immer konstant bleibt, wie es in den meisten Anwendungsfällen auch gewünscht ist.

Im Falle des Jalousieantriebs z. B. ist es wünschenswert, eine möglichst hohe Ausgangsgeschwindigkeit bzw. Antriebsdrehzahl des Antriebs zu erreichen, um den Jalousiebehang ein- oder auszufahren, wobei eine hohe Antriebsdrehzahl gleichzusetzen ist mit einer hohen Antrittsgeschwindigkeit. Soll aber die Lamellenstellung verändert werden, so ist eine hohe Antriebsdrehzahl des Antriebs hinderlich, da durch die hohe Antrittsgeschwindigkeit eine feine Justierung der Lamellen erschwert wird. Wird aber die Ausgangsgeschwindigkeit verringert, so ist eine feinere Justierung der Lamellen möglich; es wird jedoch mehr Zeit gebraucht, um den Behang in die gewünschte Stellung zu fahren.

### Aufgabenstellung und Lösung

Die Aufgabe der Erfindung besteht darin, ein Planetenradgetriebe für einen Antrieb zu schaffen, der sowohl eine hohe Ausgangsgeschwindigkeit zum Verfahren des Behangs als auch eine niedrigere Geschwindigkeit zum Verstellen der Lamellen bereitstellt.

Diese Aufgabe wird mit einer zusätzlichen Getriebestufe gelöst. Diese Getriebestufe wird zum Verfahren des Behangs durch Einrastung ausgeschaltet (außer Betrieb gesetzt), um so eine schnellere Ausgangsgeschwindigkeit zu erreichen. Dabei ist die zusätzliche Getriebestufe besonders ausgebildet. Die besondere Ausbildung besteht darin, dass
- diese Getriebestufe mittels einer Schraubenfeder zu- bzw. abschaltbar ist,
- die Schraubenfeder in einem Bremsring angeordnet ist, der in der Lagerkappe) festliegt,
- die zuschaltbare Getriebestufe einen Planetenradträger mit auf der einen Seite angeordneten Lagerbolzen und Planetenrädern und mit einer auf der anderen Seite angeordneten, weiterführenden Welle und einem Trägermitnehmer aufweist,
- ein in einem Gehäuseteil des Planetengetriebes drehbares, weiteres Hohlrad mit einer Innenverzahnung und einer am Innenverzahnungsrand befestigten Mitnehmerzapfen vorgesehen ist, wobei die Planetenräder der zuschaltbaren Getriebestufe in dieser Innenverzahnung kämmen,
- die Schraubenfeder ein gebogenes erstes Ende aufweist, das sich hinter den Mitnehmerzapfen legt, und
- die Schraubenfeder ein nach innen gebogenes zweites Ende aufweist, das durch den Trägermitnehmer mitnehmbar ist.

Zum Wenden der Lamellen wird die zuschaltbare Getriebestufe zugeschaltet, und damit wird die Antrittsgeschwindigkeit vermindert.

Diese zuschaltbare Getriebestufe ist mit einem Festhalte- und Freigabemittel in Form der Schraubenfeder versehen, das nach dem Verfahren des Behangs in die Endstellung auslöst und damit diese Getriebestufe ausrastet und damit einschaltet. Wird nun die Lamelle in die gewünschte Position verfahren, so geschieht dies mit einer langsameren Geschwindigkeit, da die Getriebestufe zugeschaltet ist.

Wird nun der Behang wieder in die andere Richtung verfahren, so rastet die zuschaltbare Getriebestufe nach Zurücklegung eines vordefinierten Wegs wieder ein, und ermöglicht so durch das Festhalten der Getriebestufe eine höhere Ausgangsgeschwindigkeit. Somit benötigt der Behang weniger Zeit, um zu seiner gewünschten Position zu fahren.

Gemäß einer einfachen, weiteren Ausbildung der Erfindung sind zum Festlegen des Bremsrings eine Längsrippe in der Lagerkappe und ein Längsschlitz im Bremsring angeordnet.

Gemäß einer einfachen, weiteren Ausbildung der Erfindung ist das Gehäuseteil des Planetengetriebes ein verlängerter Teil des Hohlrads.

### Ausführungsbeispiel

Die Erfindung wird nun anhand eines Ausführungsbeispiels näher erläutert. Es zeigen:

Fig. 1 eine Explosionsdarstellung eines Planetengetriebes mit einer zuschaltbaren Getriebestufe gemäß der Erfindung,

Fig. 2 eine Explosionsdarstellung der zuschaltbaren Getriebestufe der Fig. 1,

Fig. 3 eine Ansicht der montierten, zuschaltbaren Getriebestufe der Fig. 1 und

Fig. 4 eine perspektivische, geschnittene Seitenansicht der Getriebestufen in einem Gehäuse.

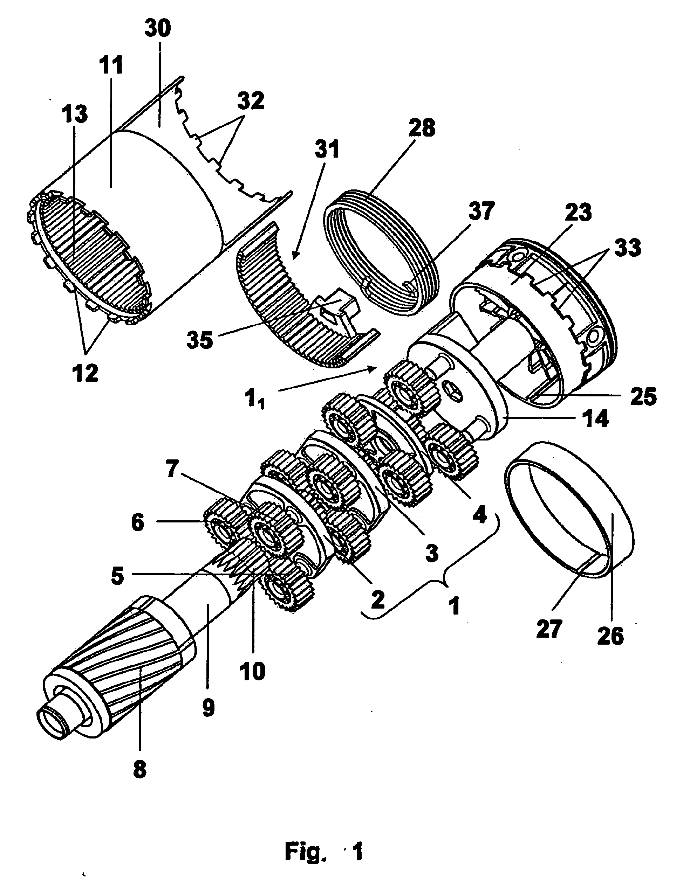

In Fig. 1 ist ein Planetenradgetriebe mit mehreren Getriebestufen dargestellt. Es sind drei Getriebestufen 1 zu sehen, von denen jede einen Planetenradträger 2 bzw. 3 bzw. 4 aufweist. Jeder Planetenradträger, wie der Planetenradträger 2, ist mit drei gleichmäßig verteilten Lagerbolzen versehen, auf denen drei Planetenräder, wie die Planetenräder 5, 6, 7, drehbar angeordnet sind. Auf der den Planetenrädern gegenüberliegenden Seite weist jeder Planetenradträger einen (nicht dargestellten) zentralen Zahnwellenzapfen auf, der jeweils in die nächstfolgenden Planetenräder eingreift und diese antreibt, so dass der jeweils folgende Planetenradträger mit Hilfe eines noch zu beschreibenden Hohlrads zum Drehen gebracht wird.

Die Planetenräder 5, 6, 7 werden durch einen Motor angetrieben, von dem nur der Rotor 8 und die Motorwelle 9 gezeigt sind. Die Motorwelle 9 ist fest mit dem Rotor 8 verbunden und trägt eine Endverzahnung 10, die in die Planetenräder 5, 6, 7 eingreift.

Mit dem (nicht dargestellten) Motorgehäuse ist ein (das vorgenannte) Hohlrad 11 mittels einer ersten Randverzahnung 12 fest verbunden. Das Hohlrad 11 weist ferner eine Innenverzahnung 13 auf, auf der die Planetenräder, wie die Planetenräder 5, 6, 7, kämmen.

Das bis hierhin beschriebene Untersetzungsgetriebe ist bekannt und kann beispielsweise der EP 546995 B1 entnommen werden.

Die Erfindung besteht nun in einer weiteren, sich an die Getriebestufen 1 anschließenden, zuschaltbaren Getriebestufe 1₁.

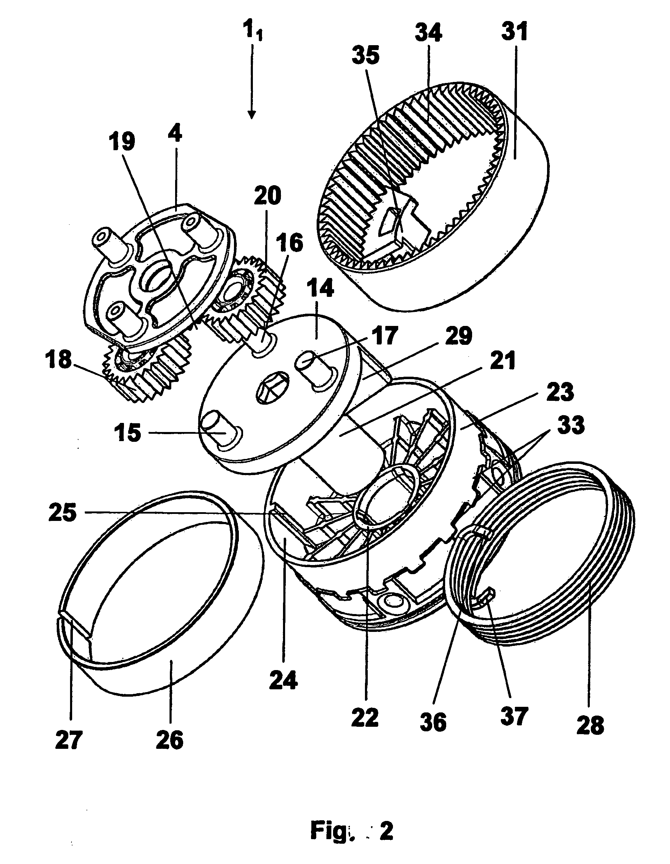

Diese Getriebestufe 1₁ umfasst einen Planetenradträger 14 mit drei gleichmäßig verteilten Lagerbolzen 15, 16, 17 (Fig. 2), auf denen drei Planetenräder 18, 19, 20 drehbar angeordnet sind. Auf der diesen Planetenrädern gegenüberliegenden Seite des Planetenradträgers 14 ist eine weiterführende Welle 21 zum Antrieb der Jalousie-Wickelwelle einstückig mit dem Planetenradträger 14 verbunden. Diese Welle 21 ist in einer zentralen Lagerhülse 22 einer Lagerkappe 23 gelagert. Die Lagerhülse 22 ist gegen die Seitenwand der Lagerkappe 23 abgestützt und weist über dieser Abstützung eine freie Innenringfläche 24 auf. In der Innenringfläche 24 ist eine Längsrippe 25 vorgesehen.

Zur Getriebestufe 1₁ gehört auch ein Bremsring 26, der mit einem Längsschlitz 27 ausgestattet ist. Die Breite des Bremsrings 26 entspricht etwa der Breite der freien Innenringfläche 24. Dieser Bremsring 26 wird in die Lagerkappe 23 eingesetzt, wobei die Längsrippe 25 in den Längsschlitz 27 eingefügt wird. In diesen Bremsring 26 passt eine zur Getriebestufe 1₁ gehörende Schraubenfeder 28, die als Schling- und Schleppfeder arbeitet, wie noch näher erläutert wird.

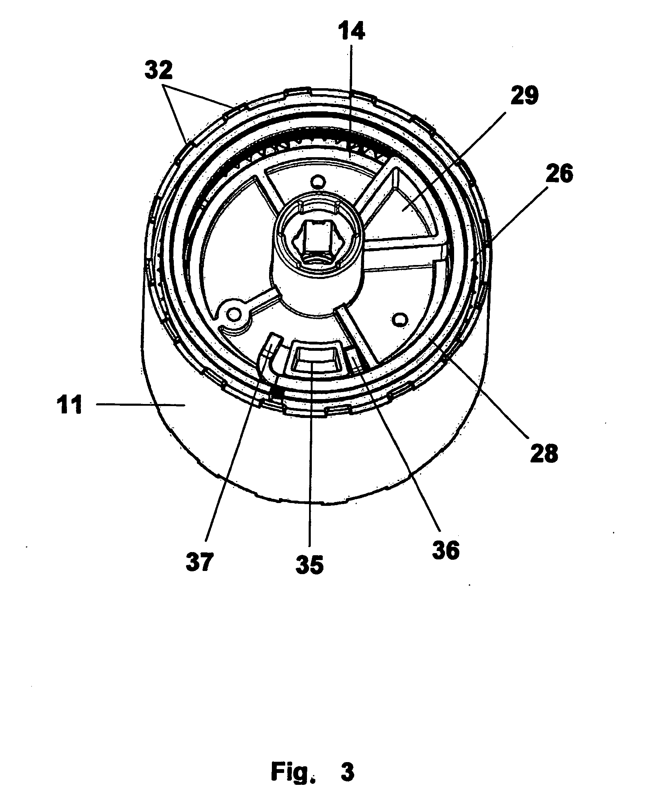

Auf der den Planeternrädern18-20 gegenüberliegenden Seite trägt der Planetenradträger 14 ferner einen Trägermitnehmer 29, dessen Ausbildung als dreiwandiger Vorsprung am besten aus Fig. 3 hervorgeht.

Zur Getriebestufe 1₁ gehören ferner ein von der Innenverzahnung 13 freier, verlängerter Teil 30 des Hohlrads 11 und ein weiteres Hohlrad 31. Der Teil 30 und das weitere Hohlrad 31 sind in Fig. 1 geschnitten dargestellt, während das weitere Hohlrad 31 in Fig. 2 voll gezeigt ist.

Der Teil 30 ist an seinem Rand mit einer Zahnung 32 versehen, die in eine komplementäre Zahnung 33 am Außenumfang der Lagerkappe 23 passt. Im Teil 30 ist das weitere Hohlrad 31 drehbar gelagert. Das weitere Hohlrad 31 weist eine Innenverzahnung 34 auf, in der die Planetenräder 18-20 kämmen. Das weitere Hohlrad 31 ist ferner innen mit einem nach außen achsparallel verlaufenden Mitnehmerzapfen 35 versehen, der die Form eines vierwandigen Vorsprungs aufweist. Hinter diesen Mitnehmerzapfen 35 legt sich im zusammengebauten Zustand des Planetenradgetriebes ein abgebogenes erstes Ende 36 der Schraubenfeder 28, während ein nach innen abgebogenes zweites Ende 37 der Schraubenfeder 28 vom Trägermitnehmer 29 mitnehmbar ist.

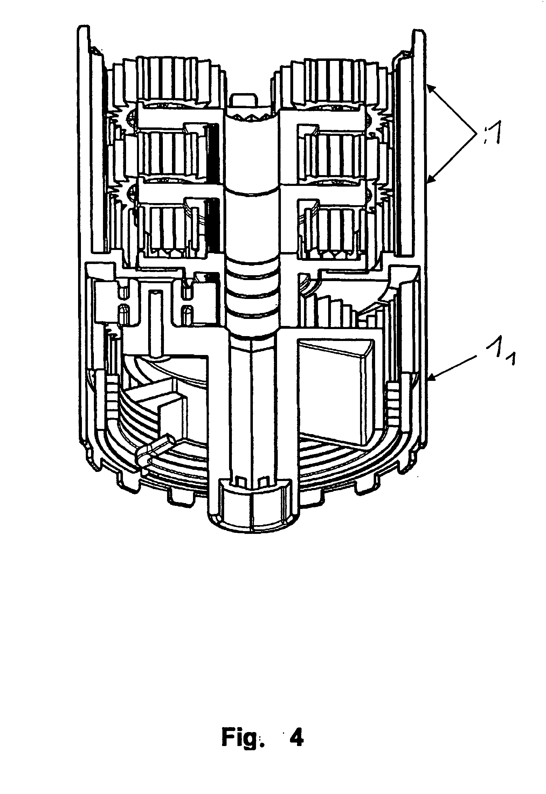

Ein Teil der Getriebestufe 1 mit der zuschaltbaren Getriebestufe 1₁ ist zusammengebaut und geschnitten in Fig. 4 dargestellt.

Die zuschaltbare Getriebestufe 1₁ arbeitet folgendermaßen.

Wenn der Umfang der Schraubenfeder 28 durch Gegenstoßen des zweiten Endes 37 gegen den Trägermitnehmer 29 vergrößert wird, legt sich die Schraubenfeder 28 fest an den Bremsring 26, und das weitere Hohlrad 31 wird über das erste Ende 36 und den Mitnehmerzapfen 35 blockiert. Damit ist die Getriebestufe 1₁ zugeschaltet, so dass ein langsameres Wenden der Jalousielamellen möglich ist.

Sobald aber dieses Gegenstoßen aufgehoben wird, wird der Kontakt der Schraubenfeder 28 mit dem Bremsring 26 unterbunden und das weitere Hohlrad 31 freigegeben. Das weitere Hohlrad 31 kann sich dann durch das Kämmen der Planetenräder 18-20 drehen. Damit ist die weitere Getriebestufe 1₁ abgeschaltet, so dass eine höhere Verfahrgeschwindigkeit zum Absenken oder Aufziehen der Jalousielamellen zur Verfügung steht.

### Bezugszeichenliste

- 1: Getriebestufen
- 1₁: Zuschaltbare Getriebestufe mit Schraubenfeder
- 1₂: Zuschaltbare Getriebestufe mit selbsthemmendem Getriebe
- 1₃: Zuschaltbare Getriebestufe mit Trommelbremse
- 2, 3, 4: Getriebestufen
- 5, 6, 7: Planetenrad
- 8: Rotor
- 9: Motorwelle
- 10: Endverzahnung
- 11: Hohlrad
- 12: Randverzahnung
- 13: Innenverzahnung
- 14: Planetenradträger
- 15, 16, 17: Lagerbolzen
- 18, 19, 20: Planetenrad
- 21: Weiterführende Welle
- 22: Lagerhülse
- 23: Lagerkappe
- 24: Freie Innenringfläche
- 25: Längsrippe
- 26: Bremsring
- 27: Längsschlitz
- 28: Schraubenfeder
- 29: Trägermitnehmer
- 30: Verlängerter Teil
- 31: Weiteres Hohlrad
- 32,33: Zahnung
- 34: Innenverzahnung
- 35: Mitnehmerzapfen
- 36: Erstes Ende
- 37: Zweites Ende

## Patentansprüche

1. Planetenradgetriebe für einen Antriebsmotor, insbesondere für Rollläden, Jalousien, Markisen, Tore, Türen und dergleichen, dessen Drehzahl durch mehrstufig angeordnete Planetenräder (5, 6, 7), die in einem Hohlrad (11) gekämmt werden, vermindert wird, wobei im Planetenradgetriebe mehrere Planetenradträger (2, 3, 4) nacheinander angeordnet sind, die jeweils auf der einen Seite mehrere Lagerbolzen, auf denen Planetenräder (5, 6, 7) drehbar gelagert sind, und auf der gegenüberliegenden Seite eine zentrale Zahnwelle zum Antrieb der jeweils folgenden Planetenräder tragen, wobei ein feststehendes Hohlrad (11) mit einer Innenverzahnung (13), in der die Planetenräder (5, 6, 7) kämmen, und eine Lagerkappe (23) des Planetengetriebes vorgesehen sind,
**dadurch gekennzeichnet, dass**
- mindestens eine zuschaltbare Getriebestufe (1₁) für niedrigere Ausgangsdrehzahlen vorgesehen ist,
- diese Getriebestufe mittels einer Schraubenfeder (28) zu- bzw. abschaltbar ist,
- die Schraubenfeder (28) in einem Bremsring (26) angeordnet ist, der in der Lagerkappe (23) festliegt,
- die zuschaltbare Getriebestufe (1₁) einen Planetenradträger (14) mit auf der einen Seite angeordneten Lagerbolzen (15, 16, 17) und Planetenrädern (18, 19, 20) und mit einer auf der anderen Seite angeordneten, weiterführenden Welle (21) und einem Trägermitnehmer (29) aufweist,
- ein in einem Gehäuseteil (30) des Planetengetriebes drehbares, weiteres Hohlrad (31) mit einer Innenverzahnung (34) und einer am Innenverzahnungsrand befestigten Mitnehmerzapfen (35) vorgesehen ist, wobei die Planetenräder (18, 19, 20) der zuschaltbaren Getriebestufe (1₁) in dieser Innenverzahnung (34) kämmen,
- die Schraubenfeder (28) ein gebogenes erstes Ende (36) aufweist, das sich hinter den Mitnehmerzapfen (35) legt, und
- die Schraubenfeder (28) ein nach innen gebogenes zweites Ende (37) aufweist, das durch den Trägermitnehmer (29) mitnehmbar ist.

2. Planetenradgetriebe nach Anspruch 1,
**dadurch gekennzeichnet,**
**dass** zum Festlegen des Bremsrings (26) eine Längsrippe (25) in der Lagerkappe (23) und ein Längsschlitz im Bremsring (26) angeordnet sind.

3. Planetenradgetriebe nach Anspruch 1 oder 2,
**dadurch gekennzeichnet,**
**dass** das Gehäuseteil (30) des Planetengetriebes ein verlängerter Teil des Hohlrads (11) ist.

## Claims

1. A planetary gear for a driving motor, in particular for roller shutters, blinds, awnings, gates, doors and the like, the rotational speed of which planetary gear is reduced by means of planet wheels (5, 6, 7) that are disposed in multiple stages and mesh with a ring gear (11), and a plurality of planet carriers (2, 3, 4) are disposed in succession in the planetary gear, which on one side each carry a plurality of bearing bolts on which planet wheels (5, 6, 7) are rotatably supported and on the opposite side carry a central rack for driving the next planet wheels in succession, and a fixed ring gear (II), having an internal gearing (13) with which the planet wheels (5, 6, 7) mesh, and a bearing cap (23) of the planetary gear are provided,
**characterized in that**
- at least one gear stage (1₁) for lower initial rotational speeds that can be switched on is provided;
- this gear stage can be switched on and off by means of a helical spring (28);
- the helical spring (28) is disposed in a brake ring (26), which is fixed in the bearing cap (23);
- the gear stage (1₁) that can be switched on has a planet carrier (14) having bearing bolts (15, 16, 17) and planet wheels (18, 19, 20) disposed on one side and having an onward-extending shaft (21) on one side and a carrier driver (29);
- a further ring gear (31), which is rotatable in a housing part (30) of the planetary gear and has an internal gearing (34) and a driver cog (35) secured to the internal gearing, is provided, and the planet wheels (18, 19, 20) of the gear stage (1₁) that can be switched on mesh with this internal gearing (34);
- the helical spring (28) has a bent first end (36), which is located after the driver cog (35); and
- the helical spring (28) has an inward-bent second end (37), which can be driven in slaved fashion by the carrier driver (29).

2. The planetary gear of claim 1,
**characterized in that**
for fixing the brake ring (26), a longitudinal rib (25) is disposed in the bearing cap (23), and a longitudinal slot is disposed in the brake ring (26).

3. The planetary gear of claim 1 or 2,
**characterized in that**
the housing part (30) of the planetary gear is an elongated part of the ring gear (11).

## Revendications

1. Engrenage planétaire dévolu à un moteur d'entraînement, en particulier pour des volets roulants, des stores à lamelles, des stores en toile, des portails, des portes et objets similaires, dont la vitesse angulaire est réduite par l'intermédiaire de pignons satellites (5, 6, 7) disposés en plusieurs étages et engrenant dans une roue creuse (11), ledit engrenage planétaire renfermant plusieurs porte-satellites (2, 3, 4) agencés en succession et portant respectivement, sur l'un des côtés, plusieurs axes de paliers sur lesquels des pignons satellites (5, 6, 7) sont montés à rotation et, sur le côté opposé, un arbre denté central conçu pour entraîner les pignons satellites respectivement successifs, sachant qu'il est prévu une roue creuse (11) fixe, dotée d'une denture intérieure (13) dans laquelle lesdits pignons satellites (5, 6, 7) engrènent, et un chapeau de palier (23) dudit engrenage planétaire,
**caractérisé par le fait**
- **qu'**au moins un étage de transmission commutable (1₁) est prévu pour des vitesses angulaires de sortie plus faibles,
- **que** cet étage de transmission peut être respectivement mis en fonction, ou hors fonction, au moyen d'un ressort hélicoïdal (28),
- **que** ledit ressort hélicoïdal (28) est logé dans un anneau de freinage (26) consigné à demeure dans le chapeau de palier (23),
- **que** ledit étage de transmission commutable (1₁) présente un porte-satellites (14) comprenant des axes de paliers (15, 16, 17) et des pignons satellites (18, 19, 20) placés sur l'un des côtés, et un arbre saillant (21) et un organe d'entraînement (29) placés de l'autre côté,
- **qu'**il est prévu une roue creuse supplémentaire (31) pouvant tourner dans une partie de carter (30) dudit engrenage planétaire, et munie d'une denture intérieure (34) et d'un tenon d'entraînement (35) fixé sur le bord de ladite denture intérieure, sachant que les pignons satellites (18, 19, 20) de l'étage de transmission commutable (1₁) engrènent dans cette denture intérieure (34),
- **que** ledit ressort hélicoïdal (28) présente une première extrémité recourbée (36) venant se placer derrière le tenon d'entraînement (35), et
- **que** ledit ressort hélicoïdal (28) présente une seconde extrémité (37) recourbée vers l'intérieur, pouvant être entraînée par l'organe d'entraînement (29) du porte-satellites.

2. Engrenage planétaire selon la revendication 1,
**caractérisé par le fait**
**qu'**une nervure longitudinale (25) est ménagée dans le chapeau de palier (23) et une fente longitudinale est pratiquée dans l'anneau de freinage (26), en vue de la consignation à demeure dudit anneau de freinage (26).

3. Engrenage planétaire selon la revendication 1 ou 2,
**caractérisé par le fait**
**que** la partie de carter (30) dudit engrenage planétaire est une partie prolongée de la roue creuse (11).
